# DEMANDE DE BREVET EUROPEEN

(11) **EP 1 303 161 A1**
(43) Date de publication de la demande: **16.04.2003**
(21) Numéro de dépôt: 02292437.7
(22) Date de dépôt: 03.10.2002
(51) Int. Cl.: H04Q 11/00

(54) **Dispositif de commutation sélective de fréquences et circuit à retard optique reconfigurable l'incorporant**

(30) Priorité: 05.10.2001 FR 0112807
(71) Demandeur: ALCATEL, 75008 Paris (FR)
(72) Inventeur: Khalfallah, Sabry, 75005 Paris (FR); Penninckx, Denis, 91620 Nozay (FR)
(74) Mandataire: Fournier, Michel

(57) **Abrégé**

L'invention concerne un dispositif de commutation optique reconfigurable pour coupler de façon sélective une ou plusieurs fréquences de premier et second signaux d'entrée de type multiplex à répartition de fréquence (WDM1, WDM2) constitués de N canaux sur des premier et second ports de sortie (O1, 02). L'invention concerne également un circuit à retard optique variable et reconfigurable comprenant ledit dispositif de commutation optique auquel est associée une boucle à retard optique.

Les spectres optiques entrant de type multiplex à répartition de fréquence (WDM1, WDM2) sont ainsi fractionnés par un premier démultiplexeur (Demux) à destination d'une pluralité d'étages entrelacés d'interrupteurs optiques (D, C, A et B) qui permettent d'alimenter sélectivement plusieurs ports d'entrée (Mᵢ) d'un multiplexeur (Mux), lequel va alors utiliser ses propriétés de routage pour mettre en oeuvre notamment la fonction complexe de commutation multiple 2X2 de fréquence reconfigurable.

## Description

L'invention concerne les systèmes de transmission à fibre optique à multiplexage en fréquence, et plus précisément, l'invention concerne un dispositif de commutation de fréquence 2X2 reconfigurable, capable de combiner de façon sélective n'importe quel canal spectral (fréquence ou bande de fréquences) de premier et second signaux entrant de type multiplex à répartition de fréquence ou WDM (acronyme pour l'expression anglo-saxonne « Wavelength Division Multiplex ») sur des premier et second ports de sortie, en fonction de leur fréquence.

L'invention se situe donc dans le contexte des architectures de commutation optique.

Au niveau des noeuds de commutation optique, arrivent des fréquences identiques transportant des informations différentes, lesquelles sont prévues pour des destinations différentes. I1 est nécessaire d'orienter ces informations vers leurs destinations respectives au niveau du noeud de commutation.

Pour ce faire, les commutateurs optiques doivent notamment mettre en oeuvre des moyens pour assurer la commutation NXN des canaux optiques de signaux entrant de type multiplex à répartition de fréquences.

De nombreux multiplexeurs à insertion extraction de fréquences ou dispositifs de commutation de ce type sont déjà connus dans l'art antérieur.

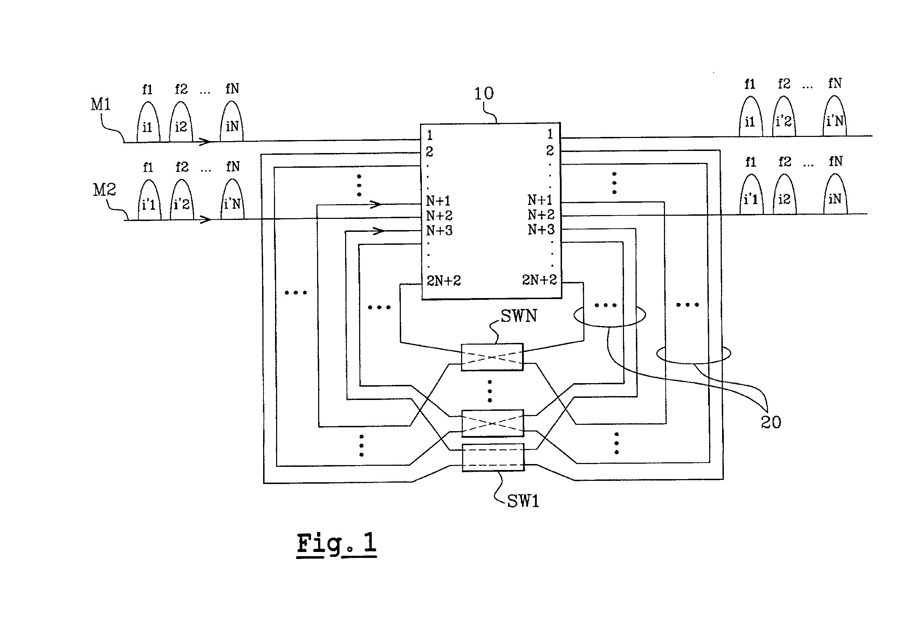

Notamment, la figure 1 illustre de façon schématique un tel dispositif pour le multiplexage à N canaux. Ce dispositif est décrit dans un article intitulé « Integrated Multichannel Optical Wavelength Selective Switches Incorporating an Arrayed-Waveguide Grating Multiplexer and Thermooptic Switches », paru en avril 1998 dans la publication J. of Ligthwave Technol., vol. 16, no. 4, pp. 650-655.

Le dispositif montré à la figure 1 comprend un réseau à guides d'onde 10 de type AWG, acronyme pour l'expression anglo-saxonne « Arrayed Waveguide Grating ». Ce réseau à guides d'onde 10 est doté de 2N+2 ports d'entrée référencés de 1 à 2N+2 sur la figure et 2N+2 ports de sortie également référencés de 1 à 2N+2. Un réseau de N commutateurs optiques 2x2 SW₁ à SW_{N} permet de connecter entre eux les différents ports d'entrée et de sortie du réseau à guides d'onde 10 par l'intermédiaire de lignes de rebouclage 20.

Sur un premier multiplex d'entrée M1 à N canaux, des informations i1, i2,..., iN sont codées respectivement sur les fréquences f1, f2, ..., fN et sur un deuxième multiplex d'entrée M2 à N canaux, des informations i'1, i'2,..., i'N sont codées respectivement sur les fréquences f1, f2,..., fN.

Ainsi, les mêmes fréquences f1 à fN véhiculent des informations différentes. Le dispositif permet alors de commuter une (ou plusieurs) information codée sur une certaine fréquence entre les deux multiplex d'entrée et les deux multiplex récupérés en sortie du dispositif.

Typiquement, dans l'exemple de la figure 1, on veut commuter, entre les deux ports d'entrée et les deux ports de sortie du dispositif, l'information i2 codée sur la fréquence f2 et l'information iN codée sur la fréquence fN avec les informations i'2 et i'N codées sur ces mêmes fréquences.

Le principe de fonctionnement pour cet exemple particulier est basé sur le fait que les fréquences du premier multiplex qui entrent sur le port d'entrée 1 vont se trouver démultiplexées sur les ports de sortie N+3 à 2N+2 et toutes les fréquences du second multiplex qui entrent sur le port N+2 sont démultiplexées vers les ports de sortie 2 à N+1.

Puis, les signaux ainsi démultiplexés sont guidés vers les N commutateurs optiques 2x2 SW₁ à SW_{N}. Les signaux avec la même fréquence fi issus respectivement des deux multiplex d'entrée M1 et M2 sont envoyés vers le même commutateur 2x2 SWi. Les signaux de sortie commutés par les N commutateurs 2x2 sont alors rebouclés vers les ports d'entrée du réseau à guides d'onde 10.

Les signaux rebouclés vers les ports d'entrée N+3 à 2N+2 d'une part, et les ports d'entrée 2 à N+1 d'autre part, sont automatiquement remultiplexés et envoyés vers deux ports de sortie du réseau à guides d'onde : les ports de sortie 1 et N+2 respectivement.

Chaque commutateur SWi permet, pour une certaine fréquence fi, d'envoyer le signal codé sur cette fréquence fi soit vers le premier ensemble de ports d'entrée 2 à N+1 et plus précisément vers le port d'entrée i+1, soit vers le deuxième ensemble de ports d'entrée N+3 à 2N+2 et plus précisément vers le port d'entrée i+N+2. Chaque commutateur SWi permet donc en fait de changer le port de sortie numéroté 1 ou N+2, sur lequel l'information codée à la fréquence fi va être envoyée.

Cependant, l'élément de routage mis en oeuvre dans le dispositif de la figure 1, à savoir le réseau à guides d'onde de type AWG, n'est absolument pas optimisé en nombre de canaux. En effet, pour pouvoir traiter N canaux avec une telle architecture, il faut un élément de routage capable de router 2N+2 canaux. Le réseau à guides d'onde est donc surdimensionné puisqu'il doit comporter 2N+2 ports d'entrée et 2N+2 ports de sortie pour traiter N fréquences.

Par conséquent, cela revient approximativement à doubler le nombre de guides d'onde dans le réseau, rendant ainsi le dispositif complexe et coûteux à mettre en oeuvre.

Un autre inconvénient de cette solution est que le dispositif est basé sur l'utilisation de commutateurs optiques 2x2.

Dans le cas où les commutateurs mis en oeuvre sont de type thermo-optiques, la vitesse de fonctionnement du dispositif est limitée. En effet, avec des commutateurs de ce type, le dispositif est incapable d'assurer la sélection des informations codées en fréquence en moins de quelques nano-secondes.

Aussi, le but que se propose d'atteindre la présente invention est de prévoir un dispositif compact et rapide palliant ainsi les inconvénients de l'art antérieur, capable d'assurer un fonctionnement de type commutation multiple de signaux multiplexés en fréquences entre deux ports d'entrée et deux ports de sortie.

A cet effet, l'invention prévoit de tirer avantage des propriétés de routage des multiplexeurs en réseau à guides d'onde pour étendre l'architecture d'un sélecteur de longueur d'onde conventionnel à une architecture comprenant plusieurs étages d'interrupteurs optiques entrelacés.

Les spectres optiques entrant de type multiplex à répartition de fréquence sont ainsi fractionnés par un premier démultiplexeur à destination d'une pluralité d'étages entrelacés d'interrupteurs optiques qui permettent d'alimenter sélectivement plusieurs ports d'entrée d'un multiplexeur, lequel va alors utiliser ses propriétés de routage pour mettre en oeuvre notamment la fonction complexe exposée plus haut, à savoir la fonction de commutation multiple 2X2 de fréquence reconfigurable.

On se propose également, en partant de l'architecture du dispositif de commutation selon la présente invention, de mettre en oeuvre un dispositif à retard optique pouvant adopter de multiples configurations et capable de stocker, retarder et extraire des paquets optiques de longueur variable.

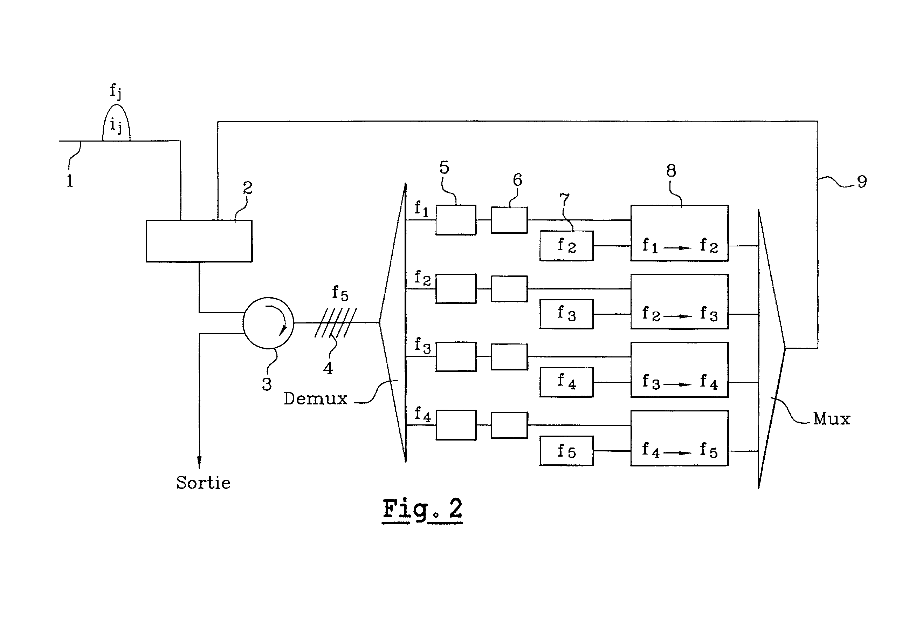

De tels circuits à retard optiques existent dans l'art antérieur, notamment la solution développée par la société NTT, décrite dans un article intitulé « Variable optical delay circuit using wavelength converters », paru en mars 2001 dans la publication Electron. Lett., vol. 37, no.7, pp.454-455. Ce dispositif de l'art antérieur est décrit en référence à la figure 2 qui montre un diagramme schématique d'un tel dispositif.

La fréquence fj transportant l'information ij arrive sur un port d'entrée optique 1 du dispositif. Dans l'exemple de la figure 2, j est compris entre 1 et 5, les paquets optiques peuvent donc être codés sur cinq fréquences différentes. Prenons le cas où un paquet optique est codé sur la fréquence f1. Un coupleur 2 envoie le signal vers un circulateur 3, lequel dirige le signal à destination d'un démultiplexeur Demux de type réseau à guides d'onde. Un filtre 4, intercalé entre le circulateur 3 et le réseau à guides d'onde Demux, est prévu pour rejeter la fréquence f5. Le paquet étant codé à f1, il n'est pas rejeté par le filtre 4 et il est donc démultiplexé et envoyé sur la première ligne de sortie du démultiplexeur Demux selon une propriété de routage classique des réseaux à guides d'onde. Chacune des quatre lignes de sortie du démultiplexeur Demux prévue pour recevoir respectivement le signal codé sur f1, le signal codé sur f2, le signal codé sur f3 et le signal codé sur f4, comprend un premier étage composé d'un amplificateur optique à semi-conducteur 5, un second étage composé d'un filtre passe-bande optique 6 et enfin un dernier étage composé d'un convertisseur de longueur d'onde 8 auquel est connectée en entrée une diode laser 7.

Ainsi, les pertes de circulation sont compensées par les amplificateurs optiques et le bruit parasite introduit par l'amplificateur est supprimé par le passage dans le filtre optique 6. Le convertisseur optique 8 positionné derrière chaque filtre 6 est alimenté d'une part, par le signal démultiplexé et, d'autre part, par le signal issu d'une diode laser 7 qui fournit au convertisseur 8, respectivement pour chacune des quatre lignes, les fréquences f2, f3, f4 et f5.

Ainsi, dans notre exemple d'un paquet codé au départ sur f1, celui-ci se retrouve codé sur f2. Puis, le signal est remultiplexé par l'intermédiaire du multiplexeur Mux et est envoyé dans la boucle optique à retard 9. Il repasse alors par le coupleur 2, le circulateur 3 et le filtre 4. Le signal étant maintenant codé sur f2, il n'est pas rejeté par le filtre. Il va être démultiplexé cette fois sur la deuxième ligne de sortie du démultiplexeur Demux et donc être converti sur la fréquence f3 avant d'être à nouveau envoyé dans la boucle optique, et ainsi de suite.

Ainsi, la longueur d'onde du signal optique inséré dans la boucle va se décaler séquentiellement jusqu'à atteindre la fréquence f5. Une fois la fréquence f5 atteinte, le signal est rejeté par le filtre 4 et est envoyé vers la sortie du circuit à retard par l'intermédiaire du circulateur 3.

En l'occurrence, le paquet codé sur f1 au départ va être inséré quatre fois dans la boucle à retard jusqu'à être converti sur la fréquence f5. De la même façon, un signal arrivant dans le circuit à retard codé sur f2 subit trois fois la boucle, un signal codé sur f3 subit deux fois la boucle etc... et un signal codé sur f5 ne boucle pas du tout.

En conséquence, le nombre de boucles subi par le signal, soit plus précisément le retard introduit dans la libération du signal par la boucle à retard a une valeur qui dépend directement de la fréquence initiale sur laquelle est codé le signal.

La caractéristique liant la durée du retard à la fréquence sur laquelle est codé le signal confère par là-même un aspect limitatif à cette architecture, puisque aucune flexibilité dans la durée des retards n'est autorisée. Ainsi, il n'est pas possible d'ajuster le retard à une quelconque durée souhaitée, celle-ci étant directement dépendante de la fréquence sur laquelle est codé le signal.

De plus, cette solution de l'art antérieur impose de mettre en oeuvre de nombreux éléments assez complexes, notamment l'ensemble formé par les diodes d'émission laser 7 et les convertisseurs de longueur d'onde 8. La complexité de cette solution constitue donc un frein à la mise en oeuvre de tels circuits à retard optique.

Pour pallier à ces inconvénients, on prévoit d'incorporer à cet effet au dispositif de commutation optique 2X2 selon la présente invention une boucle à retard de façon à mettre en oeuvre un circuit à retard optique simple à mettre en oeuvre et où la durée du retard peut être complètement variable et ne dépend pas de la fréquence du signal. Cette association particulière permet donc d'assurer une flexibilité totale pour la gestion des temps de retard. Ainsi, n'importe quel canal de fréquence d'un des spectres optiques d'entrée peut être retardé pour une durée multiple d'une durée de référence.

La présente invention propose donc une architecture unique pour mettre en oeuvre à la fois un dispositif compact et rapide pour commuter sélectivement en fonction de leur fréquence des signaux entrants de type multiplex à répartition de fréquences entre deux ports d'entrée et deux ports de sortie, et un dispositif à retard optique qui tire avantage des caractéristiques du dispositif précédent offrant ainsi une grande adaptabilité pour la durée des retards.

L'invention concerne donc un dispositif de commutation optique reconfigurable pour coupler de façon sélective une ou plusieurs fréquences de premier et second signaux d'entrée de type multiplex à répartition de fréquence constitués de N canaux sur des premier et second ports de sortie, caractérisé en ce que ledit dispositif comprend :
- un démultiplexeur ayant au moins un premier et un second port d'entrée pour recevoir respectivement lesdits premier et second multiplex à répartition de fréquence constitués de N canaux et au moins N+2 ports de sortie, quel que soit i compris entre 1 et N, le port de sortie de rang i dudit démultiplexeur (Demux) est prévu pour recevoir la fréquence correspondante de rang i du premier multiplex reçu sur le premier port d'entrée et quel que soit i compris entre 3 et N+2, le port de sortie de rang i dudit démultiplexeur est prévu pour recevoir la fréquence de rang i-2 du second multiplex reçu sur le second port d'entrée,
- un multiplexeur ayant au moins N+1 ports d'entrée et au moins deux ports de sortie, quel que soit i compris entre 2 et N+1, le port d'entrée de rang i dudit multiplexeur est prévu pour router la fréquence de rang i-1 vers le premier port de sortie dudit multiplexeur et quel que soit i compris entre 1 et N, le port d'entrée de rang i dudit multiplexeur est prévu pour router la fréquence de rang i vers le second port de sortie dudit multiplexeur,
- des moyens de commutation optique pour connecter de façon sélective n'importe quel port de sortie de rang i dudit démultiplexeur, avec i compris entre 3 et N, soit au port d'entrée de rang i-2 dudit multiplexeur, soit au port d'entrée de rang i-1 dudit multiplexeur, soit au port d'entrée de rang i (Mᵢ) dudit multiplexeur (Mux), soit au port d'entrée de rang i+1 dudit multiplexeur, les ports de sortie de rang 1 et de rang 2 dudit démultiplexeur étant connectés de façon sélective respectivement aux ports d'entrée de rang 1 ou de rang 2 dudit multiplexeur et aux ports d'entrée de rang 2 ou de rang 3 dudit multiplexeur, et les ports de sortie de rang N+1 et de rang N+2 dudit démultiplexeur étant connectés de façon sélective respectivement aux ports d'entrée de rang N-1 ou de rang N dudit multiplexeur et aux ports d'entrée de rang N ou de rang N+1 dudit multiplexeur.

L'invention concerne aussi un circuit à retard optique variable et reconfigurable, caractérisé en ce qu'il comprend ledit dispositif de commutation optique auquel est associée une boucle à retard optique connectant un port de sortie à un port d'entrée dudit dispositif de commutation.

D'autres particularités et avantages de la présente invention apparaîtront plus clairement à la lecture de la description donnée à titre d'exemple illustratif et non limitatif et faite en référence aux figures annexées dans lesquelles :
- la figure 1 est un schéma illustrant un dispositif multiplexeur à insertion et extraction de fréquences et de commutation de signaux 2X2 selon l'art antérieur et a déjà été décrite ci-dessus;
- la figure 2 montre un schéma illustrant un circuit à retard optique selon l'art antérieur et a déjà été décrit;
- la figure 3 est un schéma illustrant un exemple de fonctionnement du dispositif de commutation de fréquence 2X2 reconfigurable;
- la figure 4 est un schéma simplifié du dispositif de commutation de fréquence de la figure 3 auquel est associée une boucle à retard optique formant ainsi un circuit à retard optique variable et reconfigurable;
- la figure 5 montre les différentes étapes d'un exemple de fonctionnement du circuit à retard optique.

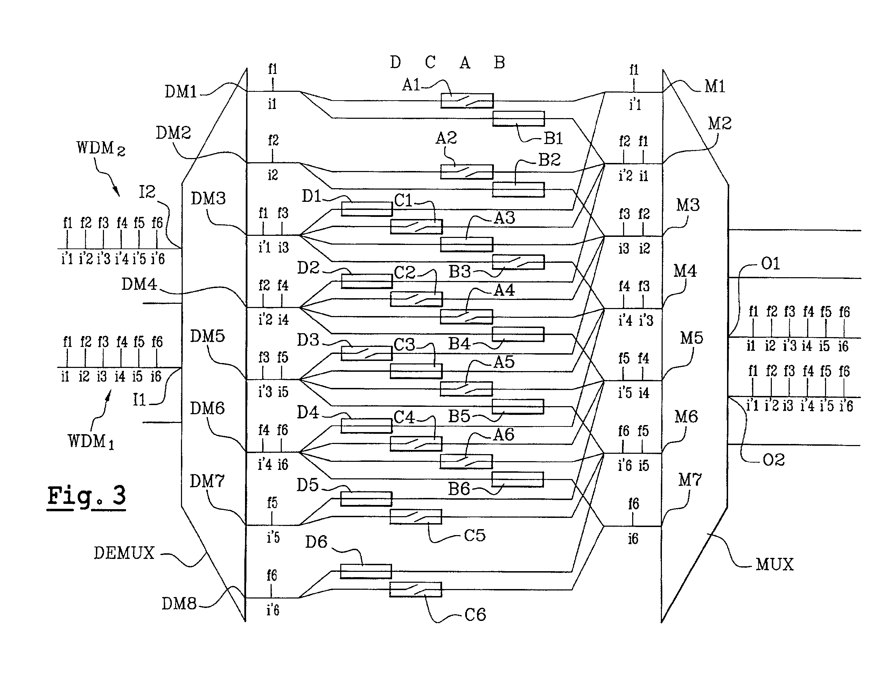

La figure 3 présente donc un exemple illustrant le principe de fonctionnement du dispositif de commutation optique selon la présente invention.

Le fonctionnement du dispositif est basé sur des signaux d'entrée de type multiplex à répartition de fréquence constitués de N canaux. Dans l'exemple de la figure 3, N est pris égal à 6.

Le dispositif comprend un premier démultiplexeur Demux ayant au moins deux ports d'entrée I1 et I2 et au moins N+2 ports de sortie, ainsi qu'un multiplexeur Mux ayant au moins N+1 ports d'entrée et au moins deux ports de sortie O1 et 02. Dans l'exemple de la figure 3, le multiplexeur comprend en fait six ports de sortie mais seuls les deux ports de sortie O1 et 02 présentent un intérêt.

Le démultiplexeur Demux et le multiplexeur Mux sont tous deux utilisés en tant que routeur. De préférence, le démultiplexeur et le multiplexeur mis en oeuvre sont de type réseau à guides d'onde.

Les ports de sortie du démultiplexeur, respectivement DM₁ à DM_{N+2} sont connectés aux ports d'entrée M₁ à M_{N+1} du multiplexeur par l'intermédiaire de moyens de commutation optique.

Les moyens de commutation optique comprennent quatre étages entrelacés de commutation optique, respectivement D, C, A et B, et chaque étage de commutation optique comprend N interrupteurs optiques. Ces interrupteurs optiques peuvent par exemple être des amplificateurs optiques.

Un premier multiplex d'entrée à répartition de fréquence WDM1 constitué des fréquences f1 à fN (N=6) est reçu sur le port d'entrée I1 du démultiplexeur Demux. Un deuxième multiplex WDM2 constitué des fréquences f1 à fN (N=6) est reçu sur le port d'entrée I2 du démultiplexeur Demux.

Les deux multiplex WDM1 et WDM2 transportent des informations différentes mais qui sont codées sur les mêmes fréquences.

Ainsi, le multiplex WDM1 transporte les informations i1, i2, i3 etc... codées respectivement sur les fréquences f1, f2, f3, etc... et le multiplex WDM2 transporte les informations i'1, i'2, i'3, etc... codées respectivement sur les fréquences f1, f2, f3 etc...

Les multiplex WDM1 et WDM2 sont donc démultiplexés par le démultiplexeur Demux.

Pour i compris entre 1 et N, le port de sortie DMᵢ reçoit l'information codée sur la fréquence correspondante fi du premier multiplex WDM1.

Selon une propriété de routage particulière du démultiplexeur Demux, le deuxième multiplex WDM2 étant reçu deux ports d'entrée plus haut par rapport au port d'entrée central I1 du démultiplexeur Demux, il est démultiplexé deux ports de sortie plus bas.

Ainsi, pour i compris entre 3 et N+2, le port de sortie DMᵢ reçoit la fréquence fi-2 du second multiplex WDM2 reçu sur le port d'entrée I2.

La plupart des N+2 ports de sortie du démultiplexeur Demux est divisée en quatre bras qui adressent chacun l'un des quatre étages d'interrupteurs optiques D, C, A et B. Les quatre bras ne sont pas recombinés ensemble vers un même port d'entrée du multiplexeur Mux mais sont au contraire connectés à des ports d'entrée différents du multiplexeur Mux.

Pour i compris entre 3 et N, le port de sortie de rang i DMᵢ du démultiplexeur Demux est connecté à l'interrupteur optique de rang (i-2) Dᵢ₋₂ de l'étage de commutation optique D, à l'interrupteur optique de rang (i-2) Cᵢ₋₂ de l'étage de commutation optique C, à l'interrupteur optique de rang i Aᵢ de l'étage de commutation optique A et à l'interrupteur optique de rang i Bᵢ de l'étage de commutation optique B.

Les ports de sortie DM₁ et DM₂ du démultiplexeur Demux sont divisés en deux et sont connectés respectivement aux interrupteurs optiques A₁ et B₁ et aux interrupteurs optiques A₂ et B₂.

Quant aux ports de sortie DM_{N+1} et DM_{N+2}, ils sont respectivement connectés aux interrupteurs optiques C_{N-1} et D_{N-1} et aux interrupteurs optiques C_{N} et D_{N}.

Pour i compris entre 2 et N, les interrupteurs optiques Aᵢ, Bᵢ₋₁, Cᵢ₋₁ et Dᵢ sont connectés au même port d'entrée Mᵢ du multiplexeur Mux.

Les interrupteurs optiques A₁ et D₁ sont quant à eux connectés au port d'entrée M₁ du multiplexeur Mux, et les interrupteurs optiques B_{N} et C_{N} sont connectés au port d'entrée M_{N+1} du multiplexeur Mux.

Ainsi, pour i compris entre 3 et N, les moyens de commutation D, C, A et B permettent de connecter n'importe quel port de sortie de rang i DMᵢ du démultiplexeur Demux, soit au port d'entrée de rang (i-2) Mᵢ₋₂, soit au port d'entrée de rang (i-1) M_{i-1,} soit au port d'entrée de rang i Mᵢ, ou bien encore au port d'entrée de rang (i+1) Mᵢ₊₁ du multiplexeur Mux.

Le port de sortie DM₁ du démultiplexeur est connecté soit au port d'entrée M₁ soit au port d'entrée M₂ du multiplexeur respectivement par l'intermédiaire des interrupteurs optiques A1 et B1, et le port de sortie DM₂ est connecté soit au port d'entrée M₂, soit au port d'entrée M₃ du multiplexeur respectivement par l'intermédiaire des interrupteurs optiques A₂ et B₂.

Enfin, le port de sortie DM_{N+1} du démultiplexeur est connecté soit au port d'entrée M_{N-1} soit au port d'entrée M_{N} du multiplexeur respectivement par l'intermédiaire des interrupteurs D_{N-1} et C_{N-1}, et enfin le port de sortie DM_{N+2} est connecté soit au port d'entrée M_{N} soit au port d'entrée M_{N+1} du multiplexeur respectivement par l'intermédiaire des interrupteurs D_{N} et C_{N}.

En sortie du démultiplexeur Demux, les fréquences démultiplexées issues des deux multiplex d'entrée WDM1 et WDM2 sont donc divisées au sein des quatre étages entrelacés de commutation optique D, C, A et B selon les règles exposées ci-dessus, puis sont transmises à destination des ports d'entrée du multiplexeur Mux ou bien éliminées, en fonction de l'activation des différents interrupteurs optiques composant chacun des étages de commutation optique. Les fréquences composant les deux multiplex d'entrée sont alors adressées sélectivement aux ports d'entrée consécutifs M₁ à M_{N+1} du multiplexeur Mux.

Selon une propriété de routage particulière du multiplexeur routeur Mux, en considérant toutes les fréquences qui rentrent dans le multiplexeur routeur Mux avec la même configuration qu'en sortie du démultiplexeur Demux, c'est-à-dire la fréquence f1 adressée au port d'entrée M₁ du multiplexeur, la fréquence f2 adressée au port d'entrée M₂ du multiplexeur etc..., ces fréquences se retrouvent multiplexées sur le port de sortie central 02 du multiplexeur routeur Mux.

Par contre, en considérant les fréquences qui se trouvent décalées d'un port vers le bas à l'entrée du multiplexeur routeur Mux, c'est-à-dire la fréquence f1 adressée au port d'entrée numéro deux M₂, la fréquence f2 adressée au port d'entrée numéro trois M₃, ces fréquences se trouvent multiplexées un port de sortie plus haut, soit le port de sortie O1 du multiplexeur routeur Mux.

Les interrupteurs optiques des différents étages D, C, A et B peuvent être activés de la façon qui suit. Une première configuration voit les étages de commutation optiques D et C non activés, c'est-à-dire que tous leurs interrupteurs optiques sont éteints, et les étages de commutation A et B configurés de façon complémentaire.

Ainsi, pour i compris entre 1 et N, l'interrupteur Aᵢ est fermé et les interrupteurs A_{j≠i} sont ouverts tandis que l'interrupteur Bᵢ est ouvert et les interrupteurs B_{j≠i} sont fermés. Dans une telle configuration, la fréquence fi d'un signal WDM entrant sur le port d'entrée I1 du dispositif va sortir sur le port de sortie central 02 tandis que toutes les autres fréquences fj≠i du signal WDM vont sortir sur le port de sortie O1 situé au-dessus.

Quand un deuxième signal WDM, codé sur les mêmes fréquences f1 à fN que le premier signal WDM reçu sur le port d'entrée I1, est envoyé simultanément sur le second port d'entrée I2 du dispositif et que l'étage de commutation optique C est configuré de la même façon que l'étage A (c'est-à-dire pour i compris entre 1 et N, l'interrupteur Cᵢ est fermé et les interrupteurs C_{j≠i} sont ouverts), le signal codé sur la fréquence fi du deuxième multiplex entrant sur le port d'entrée I2 est inséré dans le spectre optique obtenu sur le port de sortie 01.

En effet, selon une propriété de routage particulière du démultiplexeur routeur Demux, puisque le signal codé sur la fréquence fi du multiplex entrant sur le port d'entrée I2 arrive en entrée du démultiplexeur deux ports au-dessus du port d'entrée central I1, il est routé en sortie du démultiplexeur Demux deux ports plus bas, soit sur le port de sortie DMᵢ₊₂. Le signal codé sur la fréquence fi est alors envoyé sur le port d'entrée Mᵢ₊₁ du multiplexeur routeur Mux grâce à l'activation de l'interrupteur Cᵢ, et est donc routé en sortie du multiplexeur routeur un port de sortie plus haut par rapport au port de sortie central 02, soit sur le port de sortie O1, selon la propriété de routage déjà expliqué plus haut.

Dans la situation où l'étage de commutation optique D est alors configuré d'une façon complémentaire à l'étage de commutation C, c'est-à-dire, pour i compris entre 1 et N, l'interrupteur Dᵢ est ouvert et les interrupteurs D_{j≠i} sont fermés, les fréquences f_{j≠i} du deuxième multiplex reçu sur le port d'entrée I2 sont envoyées à destination du port de sortie 02. En effet, elles sont d'abord démultiplexées à destination des ports de sortie DMⱼ₊₂ du démultiplexeur routeur Demux, puis envoyées à destination des ports d'entrée Mⱼ grâce à l'activation des interrupteurs optiques D_{j≠i}. Les fréquences f_{j≠i} sont alors routées à destination du port de sortie central 02 du dispositif.

Dans la configuration expliquée ci-dessus de façon générale, le dispositif selon l'invention permet de mettre en oeuvre la commutation sélective de la fréquence fi entre les ports d'entrée I1 et I2 et les ports de sortie O1 et 02.

La figure 3 montre un exemple particulier de cette configuration, avec N=6 et i=3.

La figure 3 montre donc un exemple de fonctionnement où chacun des deux signaux WDM, WDM1 et WDM2, arrivant respectivement sur les ports d'entrée I1 et I2, est constitué de 6 canaux de fréquence f1 à f6.

En considérant d'abord le premier multiplex WDM1, l'information i3 codée sur la fréquence f3 est extraite du port de sortie I1 et sort sur le port de sortie central 02 du multiplexeur Mux et toutes les autres informations i1, i2, i4, i5 et i6 codées respectivement sur les fréquences f1, f2, f4, f5 et f6 sont envoyées du port d'entrée I1 à destination du second port de sortie plus haut O1 du multiplexeur.

Considérons maintenant le deuxième multiplex WDM2 reçu simultanément sur le port d'entrée I2 du démultiplexeur Demux. L'information i'3 codée sur la fréquence f3 est insérée du port d'entrée I2 dans le spectre optique de sortie sur le port de sortie O1 du multiplexeur Mux. En effet, comme l'information i'3 codée sur f3 rentre dans le démultiplexeur deux ports d'entrée plus haut par rapport au port d'entrée central I1, elle est routée deux ports de sortie plus bas au niveau des ports de sortie du démultiplexeur, soit à destination du port de sortie DM₅.

L'information i'3 codée sur f3 est alors adressée au port d'entrée M₄ du multiplexeur par l'intermédiaire de l'activation de l'interrupteur optique C₃. Par conséquent, l'information i'3 est routée un port de sortie plus haut par rapport au port de sortie central 02 du multiplexeur et est insérée dans le spectre optique de sortie au niveau du port de sortie O1.

Simultanément, toutes les autres informations i'1, i'2, i'4, i'5 et i'6 codées respectivement sur les fréquences f1, f2, f4, f5 et f6 sont envoyées du port d'entrée I2 à destination du port de sortie central 02 du multiplexeur.

Dans un souci de ne pas surcharger davantage la figure, toutes les fréquences composant les deux multiplex d'entrée WDM1 et WDM2 ne sont pas représentées au niveau des ports d'entrée et de sortie du multiplexeur Mux. Seules les fréquences routées effectivement à destination des ports de sortie 02 et O1 sont représentées au niveau des ports d'entrée M₁ à M₇ du multiplexeur routeur Mux.

En effet, sur certains ports d'entrée du multiplexeur Mux, jusqu'à six fréquences différentes peuvent être présentes qui sont alors routées à destination des six ports de sortie du multiplexeur routeur Mux. Parmi ces six ports de sortie, seuls les deux ports de sortie O1 et 02 présentent un intérêt dans le cadre de la fonction de commutation mis en oeuvre. Les quatre ports de sortie supplémentaires, non référencés sur la figure 3, ne fournissent en effet pas un spectre optique complet mais peuvent néanmoins être utilisés en vue d'un contrôle du signal.

L'exemple de la figure 3 illustre donc la commutation sélective de la fréquence fi entre les ports d'entrée I1 et I2 et les ports de sortie O1 et 02 du dispositif.

Cependant, le dispositif de la figure 3 peut également mettre en oeuvre une commutation multiple de fréquences entre les ports d'entrée I1 et I2 et les ports de sortie O1 et 02.

Pour ce faire, il est nécessaire d'activer (c'est-à-dire mettre en position fermée) plusieurs interrupteurs optiques dans l'étage de commutation A et d'activer les interrupteurs optiques de l'étage C suivant la même configuration, et enfin d'activer les interrupteurs optiques des étages de commutation B et D de façon complémentaire par rapport aux étages de commutation A et C.

Le dispositif de commutation sélective de fréquence entre deux multiplex d'entrée à répartition de fréquence selon la présente invention est donc un dispositif dont le fonctionnement peut être adapté avec une grande flexibilité, et qui mélange les fonctions de multiplexage à insertion et extraction de fréquence et de commutation de façon à pouvoir exécuter sélectivement une commutation 2X2 pour chaque fréquence simultanément. Le multiplexage à insertion et extraction de fréquence permet en effet d'extraire une information codée sur une certaine fréquence du port d'entrée I1 vers le port d'extraction 02, et d'insérer une autre information codée sur la même fréquence entrant sur le port d'insertion I2 à destination du port de sortie O1. Quant à la fonction de commutation 2X2, elle permet d'échanger les signaux entrant sur les ports d'entrée I1 et I2 à destination des ports de sortie O1 et 02.

Le dispositif selon la présente invention est également reconfigurable et permet un fonctionnement très rapide. En effet, l'utilisation d'interrupteurs optiques de type amplificateurs optiques permet de modifier la configuration de routage en moins de 5 nanosecondes.

De plus, les réseaux à guides d'onde utilisés ne sont pas surdimmensionnés contrairement aux dispositif de l'art antérieur. En effet, pour des multiplex d'entrée constitués de N fréquences, les réseaux à guides d'onde mis en oeuvre dans la présente invention sont prévus pour router un maximum de N+2 fréquences. I1 sont donc moins complexes et procurent une réduction en taille importante pour le dispositif selon l'invention par rapport aux solutions de l'art antérieur.

Enfin, le dispositif selon l'invention nécessite simplement un unique port d'insertion et un unique port d'extraction au lieu de prévoir autant de ports d'insertion et d'extraction qu'il y a de fréquences devant être insérées ou extraites.

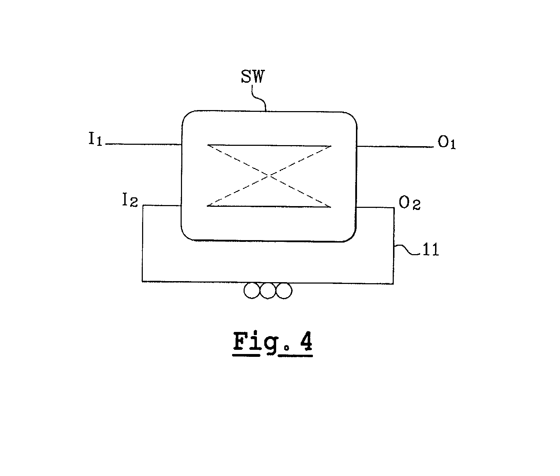

En référence à la figure 4, une variante du dispositif de commutation optique selon la présente invention consiste à lui adjoindre une boucle optique de façon à mettre en oeuvre un circuit à retard optique variable. Ainsi, en référence à la figure 4, au dispositif de commutation SW, représenté de façon schématique et simplifiée par rapport à la figure 3, est associée une boucle optique 11 connectant le port de sortie 02, dit port d'extraction, du dispositif de commutation selon l'invention SW au port d'entrée I2, dit port d'insertion (dans un but de clarification, les ports d'entrée I1 et I2 ont été inversés sur la figure 4 par rapport à la figure 3).

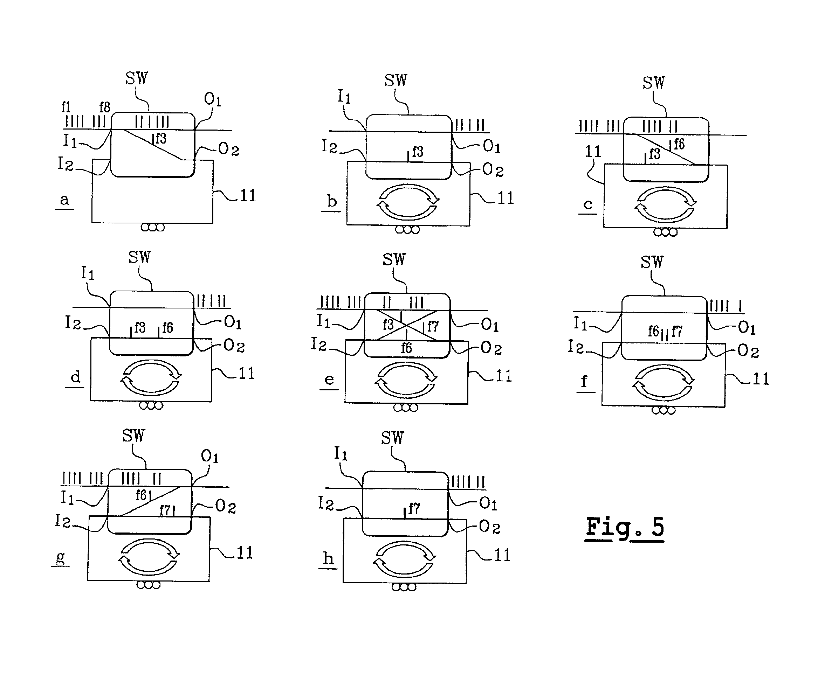

Le port de sortie 02 est donc connecté au port d'entrée I2 par l'intermédiaire de la boucle optique 11. La grande flexibilité du dispositif de commutation selon l'invention, qui permet de connecter sélectivement le port d'entrée I2 au port de sortie 02 pour chacune des fréquences peut alors être exploitée pour mettre en oeuvre, en combinaison avec la boucle optique 11, la mémorisation d'une fréquence sélectionnée pendant une durée variable. Un exemple de fonctionnement de ce circuit à retard optique est représenté à la figure 5.

Tout d'abord, un multiplex constitué de huit fréquences f1 à f8 est envoyé sur le port d'entrée I1. A l'étape a, la fréquence f3 est envoyée du port d'entrée I1 à destination du port de sortie O2, alors que toutes les autres fréquences sont transmises vers le port de sortie O1. Ceci est bien sûr rendu possible par l'activation adéquate des différents interrupteurs optiques dans les étages de commutation optique D, C, A et B comme expliqué en référence à la figure 3.

L'étape b de la figure 5 montre que I2 est connecté sélectivement à 02, créant ainsi une boucle à retard optique 11 pour la fréquence f3 sélectionnée. Les étapes c et d montrent qu'il est possible à tout moment d'insérer une autre fréquence, en l'occurrence f6, dans la boucle à retard optique tout en gardant la fréquence f3 dans la boucle. A l'étape e, une troisième fréquence f7 est insérée dans la boucle à retard optique 11 pendant que la fréquence f3 est extraite de la boucle pour être envoyée sur le port de sortie O1. L'étape f montre que seules les fréquences f6 et f7 restent alors dans la boucle à retard optique 11. Au moment voulu, voir l'étape g, la fréquence f6 est à son tour extraite de la boucle à retard optique 11, tandis que la fréquence f7 y demeure jusqu'à ce que la durée souhaitée du retard soit atteinte, voir l'étape h.

Ce processus, décrit à simple titre d'exemple en référence à la figure 5, peut être mis en oeuvre grâce aux caractéristiques particulières déjà évoquées du dispositif de commutation selon la présente invention permettant de réaliser une commutation 2X2 sélective pour chaque fréquence simultanément entre les ports d'entrée I1 et I2 et les ports de sortie O1 et 02. Le processus complet mis en oeuvre par le circuit à retard optique selon la présente invention est donc rendu possible grâce à la possibilité de reconfigurer complètement le dispositif de commutation 2X2 pour chaque fréquence sélectivement, et ce en jouant sur l'activation des différents interrupteurs optiques composant les étages de commutation optique D, C, A et B du dispositif de commutation.

Le circuit à retard optique de la présente invention permet donc de stocker, retarder et extraire de façon sélective une ou plusieurs fréquences du multiplex d'entrée, la durée du retard étant complètement flexible. Ainsi, n'importe quelle fréquence peut être retardée pendant n'importe quelle durée souhaitée, avec la contrainte néanmoins, dans le cas où les interrupteurs optiques sont de type amplificateur optique, du facteur de bruit dû à une accumulation de bruit à chaque passage des fréquences retardées dans la boucle. Une solution consisterait alors à disposer un filtre derrière chacun des interrupteurs optiques des différents étages de commutation du dispositif.

## Revendications

1. Dispositif de commutation optique reconfigurable pour coupler de façon sélective une ou plusieurs fréquences de premier et second signaux d'entrée de type multiplex à répartition de fréquence (WDM1, WDM2) constitués de N canaux sur des premier et second ports de sortie (O1, O2), **caractérisé en ce que** ledit dispositif comprend :
- un démultiplexeur (Demux) ayant au moins un premier et un second port d'entrée (I1, I2) pour recevoir respectivement lesdits premier et second multiplex à répartition de fréquence constitués de N canaux (WDM1, WDM2) et au moins N+2 ports de sortie, quel que soit i compris entre 1 et N, le port de sortie de rang i (DMᵢ) dudit démultiplexeur (Demux) est prévu pour recevoir la fréquence correspondante de rang i (fi) du premier multiplex (WDM1) reçu sur le premier port d'entrée (I1) et quel que soit i compris entre 3 et N+2, le port de sortie de rang i (DMᵢ) dudit démultiplexeur (Demux) est prévu pour recevoir la fréquence de rang i-2 (fi-2) du second multiplex (WDM2) reçu sur le second port d'entrée (I2),
- un multiplexeur (Mux) ayant au moins N+1 ports d'entrée et au moins deux ports de sortie (O1, O2), quel que soit i compris entre 2 et N+1, le port d'entrée de rang i (Mᵢ) dudit multiplexeur (Mux) est prévu pour router la fréquence de rang i-1 (fi-1) vers le premier port de sortie (O1) dudit multiplexeur (Mux) et quel que soit i compris entre 1 et N, le port d'entrée de rang i (Mᵢ) dudit multiplexeur (Mux) est prévu pour router la fréquence de rang i (fi) vers le second port de sortie (O2) dudit multiplexeur,
- des moyens de commutation optique (D, C, A, B) pour connecter de façon sélective n'importe quel port de sortie de rang i (DMᵢ) dudit démultiplexeur (Demux), avec i compris entre 3 et N, soit au port d'entrée de rang i-2 (Mᵢ₋₂) dudit multiplexeur (Mux), soit au port d'entrée de rang i-1 (Mᵢ₋₁) dudit multiplexeur (Mux), soit au port d'entrée de rang i (Mᵢ) dudit multiplexeur (Mux), soit au port d'entrée de rang i+1 (Mᵢ₊₁) dudit multiplexeur (Mux), les ports de sortie de rang 1 (DM₁) et de rang 2 (DM₂) dudit démultiplexeur (Demux) étant connectés de façon sélective respectivement aux ports d'entrée de rang 1 (M₁) ou de rang 2 (M₂) dudit multiplexeur (Mux) et aux ports d'entrée de rang 2 (M₂) ou de rang 3 (M₃) dudit multiplexeur (Mux), et les ports de sortie de rang N+1 (DM_{N+1}) et de rang N+2 (DM_{N+2}) dudit démultiplexeur (Demux) étant connectés de façon sélective respectivement aux ports d'entrée de rang N-1 (M_{N-1}) ou de rang N (M_{N}) dudit multiplexeur (Mux) et aux ports d'entrée de rang N (M_{N}) ou de rang N+1 (M_{N+1}) dudit multiplexeur (Mux).

2. Dispositif selon la revendication 1, **caractérisé en ce que** le démultiplexeur (Demux) et le multiplexeur (Mux) mis en oeuvre sont tous deux de type réseau à guides d'onde.

3. Dispositif selon la revendication 1 ou 2, **caractérisé en ce que** les moyens de commutation optique comprennent quatre étages entrelacés constitués chacun de N interrupteurs optiques (D₁, ..., D_{N}, C₁, ..., C_{N}, A₁, ...,A_{N}, B₁, ..., B_{N}).

4. Dispositif selon la revendication 3, **caractérisé en ce que** les interrupteurs optiques sont de type amplificateurs optiques.

5. Circuit à retard optique variable et reconfigurable, **caractérisé en ce qu'**il comprend le dispositif de commutation optique (SW) selon la revendication 1 auquel est associée une boucle à retard optique (I1) connectant un port de sortie (O2) à un port d'entrée (I2) dudit dispositif de commutation (SW).
